# EUROPÄISCHE PATENTSCHRIFT

(11) **EP 2 796 717 B1**
(45) Veröffentlichungstag und Bekanntmachung des Hinweises auf die Patenterteilung: **17.10.2018**
(21) Anmeldenummer: 14000411.0
(22) Anmeldetag: 05.02.2014
(51) Int. Cl.: F04B 39/10, F04B 39/06, F04B 39/16, B60T 13/26

(54) **Kraftfahrzeug-Druckluftsystem**
Motor vehicle compressed air system
Système d'air comprimé de véhicule automobile

(30) Priorität: 25.04.2013 DE 102013007179
(43) Veröffentlichungstag der Anmeldung: 29.10.2014
(73) Patentinhaber: MAN Truck & Bus AG, 80995 München (DE)
(72) Erfinder: Ittlinger, Reinhard, 94363 Oberschneiding (DE); Förster, Joachim, 85221 Dachau (DE)
(74) Vertreter: v. Bezold & Partner Patentanwälte - PartG mbB

(56) Entgegenhaltungen:
- EP-A2- 0 504 596
- DE-A1-102004 007 189
- DE-A1-102008 018 467
- DE-A1-102010 002 243
- FR-A1- 2 925 351
- US-A- 2 449 408
- US-A- 3 708 959
- US-A- 5 765 291
- US-A1- 2006 218 938
- US-A1- 2012 174 576

## Beschreibung

Die Erfindung betrifft ein Kraftfahrzeug-Druckluftsystem, insbesondere zur Druckluftversorgung eines pneumatischen Bremssystems in einem Kraftfahrzeug, insbesondere in einem Nutzfahrzeug, wie einem Lastkraftwagen (LKW) oder einem Omnibus.

Nutzfahrzeuge (z.B. Lastkraftwagen, Omnibus) weisen in der Regel sogenannte Fremdkraftbremsanlagen auf, wobei es sich typischerweise um pneumatische Bremsanlagen handelt, d.h. um Druckluftbremsanlagen. Bei solchen Druckluftbremsanlagen wird Umgebungsluft angesaugt und von einem Luftpresser auf einen höheren Druck verdichtet, der als Betriebsdruck der Druckluftbremsanlage ausreichend ist.

Bei der Verdichtung der Umgebungsluft in dem Luftpresser fällt die in der Umgebungsluft enthaltene Luftfeuchtigkeit in der Regel in Form von Kondenswasser aus.

Dieses Kondenswasser wird von einem stromabwärts hinter dem Luftpresser angeordneten Lufttrockner gebunden und anschließend absorbiert.

Diese Trocknung der Druckluft in dem Lufttrockner funktioniert jedoch nur bis zu einer Lufttemperatur von ungefähr 65°C vollständig. Die Verdichtung der Umgebungsluft in dem Luftpresser führt jedoch zu einer Temperaturerhöhung der Druckluft, so dass die Temperatur der Druckluft im Sommer bei hohen Außentemperaturen den Grenzwert von 65°C übersteigen kann, so dass die Lufttrocknung dann nicht mehr vollständig funktioniert.

Es ist deshalb aus dem Stand der Technik bekannt, zwischen dem Luftpresser und dem Lufttrockner einen Luft-Luft-Wärmetauscher anzuordnen, um die Druckluft vor dem Lufttrockner zu kühlen. Der bekannte Luft-Luft-Wärmetauscher steht mit der Umgebungsluft in Verbindung und verwendet die Umgebungsluft als Wärmesenke.

Nachteilig an der Verwendung eines Luft-Luft-Wärmetauschers ist die Tatsache, dass die Kühlung der Druckluft nicht bei allen Außentemperaturen optimal funktioniert.

Aus DE 10 2008 018467 A1, US 2 449 408 A und US 2006/218938 A1 sind Druckluftsysteme für Kraftfahrzeuge bekannt, bei denen die Kühlung der Luft durch Druckluft-Flüssigkeits-Wärmetauscher erfolgt. Allerdings werden hierbei relativ aufwendige Metallrohrleitungen eingesetzt. Derartige Metallrohrleitungen sind jedoch schwer, teuer und korrosionsanfällig.

Der Erfindung liegt deshalb die Aufgabe zugrunde, das vorstehend beschriebene bekannte Kraftfahrzeug-Druckluftsystem entsprechend zu verbessern.

Diese Aufgabe wird durch ein erfindungsgemäßes Kraftfahrzeug-Druckluftsystem gemäß dem Hauptanspruch gelöst.

Die Erfindung beruht auf der technisch-physikalischen Erkenntnis, dass die Kühlung der Druckluft mittels eines herkömmlichen Luft-Luft-Wärmetauschers stark von den jeweils herrschenden Außentemperaturen abhängig ist.

Falls das Kühlsystem für die Druckluft auf hohe Außentemperaturen ausgelegt wird, so besteht im Winter bei kalten Außentemperaturen die Gefahr, dass das Kondenswasser in der Rohrleitung zwischen dem Luft-Luft-Wärmetauscher und dem Lufttrockner gefriert und die Rohrleitung letztlich verschließt, was zu einem Liegenbleiben des Kraftfahrzeugs führt.

Falls das Kühlsystem für die Druckluft dagegen für kalte Außentemperaturen ausgelegt wird, so besteht im Sommer bei hohen Außentemperaturen die Gefahr, dass die Temperatur der Druckluft am Eingang des Lufttrockners den zulässigen Grenzwert übersteigt, so dass der Lufttrockner dann nicht mehr optimal funktioniert.

Die Erfindung umfasst deshalb die allgemeine technische Lehre, anstelle eines herkömmlichen Luft-Luft-Wärmetauschers einen Druckluft-Flüssigkeits-Wärmetauscher einzusetzen, der Wärme von der zu kühlenden Druckluft auf eine Flüssigkeit überträgt. Der erfindungsgemäße Druckluft-Flüssigkeits-Wärmetauscher verwendet also als Wärmesenke nicht unmittelbar die Umgebungsluft und ist deshalb auch von Temperaturschwankungen der Umgebungsluft weitgehend unabhängig.

In einem bevorzugten Ausführungsbeispiel der Erfindung ist der Druckluft-Flüssigkeits-Wärmetauscher an einen Flüssigkeitskreislauf angeschlossen, in dem die als Wärmesenke dienende Flüssigkeit strömt. Vorzugsweise handelt es sich bei diesem Flüssigkeitskreislauf um einen Kühlkreislauf (z.B. Wasserkreislauf, Ölkreislauf), der einen Fahrzeugmotor (z.B. Verbrennungsmotor, wie Ottomotor oder Dieselmotor, oder Elektromotor) kühlt. Dies ist vorteilhaft, weil der Kühlkreislauf in der Regel einen Temperaturregler aufweist, der die Temperatur der Flüssigkeit in dem Flüssigkeitskreislauf regelt und innerhalb bestimmter Grenzen weitgehend konstant hält. Dies bedeutet, dass die Temperatur der als Wärmesenke dienenden Flüssigkeit in dem Kühlkreislauf weitgehend unabhängig von Schwankungen der Außentemperaturen ist, so dass die Kühlung der Druckluft auch unabhängig von den klimatischen Bedingungen ordnungsgemäß funktioniert.

Darüber hinaus bietet die erfindungsgemäße Kühlung mittels eines Druckluft-Flüssigkeits-Wärmetauschers die Möglichkeit, dass die Leitungen zwischen dem Luftpresser und dem Wärmetauscher und/oder zwischen dem Wärmetauscher und dem Lufttrockner als Kunststoffleitungen ausgeführt werden, was bei den vorherrschenden Temperaturen möglich ist und eine Kostenersparnis beinhaltet. Der Wärmetauscher ermöglicht die Verwendung von Kunststoffrohren ab dem Wärmetauscher, was sonst erst viel später möglich wäre, da die Kunststoffleitungen mit den hohen Temperaturen Probleme hätten.

Hinsichtlich der konstruktiven Realisierung des Druckluft-Flüssigkeits-Wärmetauschers bestehen verschiedene Möglichkeiten, so dass die Erfindung nicht auf eine bestimmte Bauweise des Druckluft-Flüssigkeits-Wärmetauschers beschränkt ist. Beispielsweise kann der Druckluft-Flüssigkeits-Wärmetauscher als Plattenwärmetauscher realisiert werden. Es besteht jedoch auch die Möglichkeit, dass der Druckluft-Flüssigkeits-Wärmetauscher in Paketbauweise aufgebaut ist. Die beiden vorstehend beschriebenen Bauweisen sind an sich aus dem Stand der Technik bekannt und müssen deshalb nicht näher beschrieben werden.

Weiterhin ist noch zu erwähnen, dass der Luftpresser typischerweise ein Einzylinder-Luftpresser ist und die Druckluft deshalb mit erheblichen Druckpulsationen erzeugt, wobei die Druckpulsationen wiederum störende Fördergeräusche erzeugen. Der Einsatz eines erfindungsgemäßen Druckluft-Flüssigkeits-Wärmetauschers bietet die Möglichkeit, dass diese störenden Fördergeräusche des Luftpressers durch den Druckluft-Flüssigkeits-Wärmetauscher gedämpft werden. Hierzu wird der Druckluft-Flüssigkeits-Wärmetauscher vorzugsweise als Plattenwärmetauscher realisiert.

Schließlich ist noch zu erwähnen, dass die Erfindung nicht nur Schutz beansprucht für das vorstehend beschriebene Kraftfahrzeug- Druckluftsystem. Vielmehr beansprucht die Erfindung auch Schutz für ein komplettes Kraftfahrzeug mit einem solchen Kraftfahrzeug-Druckluftsystem. Bei dem Kraftfahrzeug kann es sich beispielsweise um ein Nutzfahrzeug handeln, wie beispielsweise einen Lastkraftwagen oder einen Omnibus.

In dem erfindungsgemäßen Kraftfahrzeug dient das Kraftfahrzeug- Druckluftsystem in der Regel dazu, ein pneumatisches Bremssystem mit Druckluft zu versorgen.

Ferner beansprucht die Erfindung noch Schutz für die neuartige Verwendung eines Druckluft-Flüssigkeits-Wärmetauschers zur Kühlung der Druckluft zwischen einem Luftpresser und einem Lufttrockner.

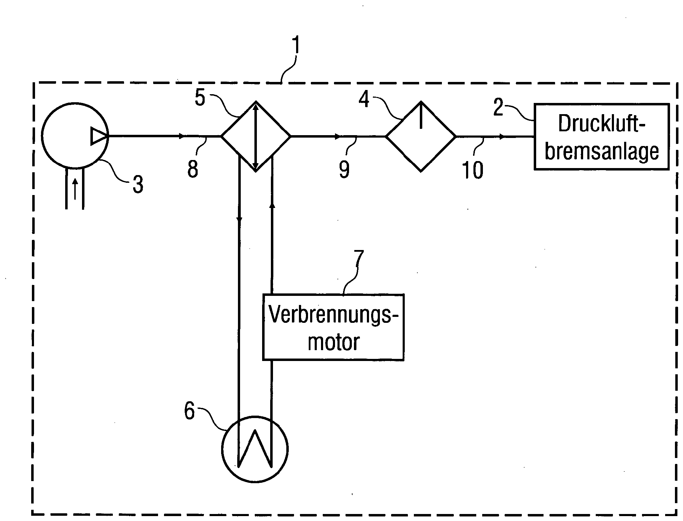

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der einzigen Figur erläutert, wobei die Figur ein Nutzfahrzeug mit einem pneumatischen Bremssystem zeigt.

Die Zeichnung zeigt in stark vereinfachter und schematisierter Form ein Nutzfahrzeug 1 (z.B. Lastkraftwagen oder Omnibus) mit einer Druckluftbremsanlage 2, wobei die Druckluftbremsanlage 2 in herkömmlicher Weise ausgebildet sein kann.

Die zum Betrieb der Druckluftbremsanlage 2 erforderliche Druckluft wird von einem Luftpresser 3 erzeugt, der Umgebungsluft ansaugt und verdichtet, wobei der Luftpresser 3 ebenfalls in herkömmlicher Weise ausgebildet sein kann.

Die Verdichtung der Umgebungsluft in dem Luftpresser 3 führt dazu, dass in der Umgebungsluft enthaltene Luftfeuchtigkeit als Kondenswasser ausfällt. Zwischen dem Luftpresser 3 und der Druckluftbremsanlage 2 ist deshalb ein Lufttrockner 4 angeordnet, der die Druckluft trocknet, wobei der Lufttrockner 4 in herkömmlicher Weise ausgebildet sein kann.

Problematisch ist hierbei, dass der Lufttrockner 4 nur bis zu einer Lufttemperatur von ungefähr 65°C optimal arbeitet, so dass die Temperatur der Druckluft am Eingang des Lufttrockners 4 diesen Grenzwert nicht überschreiten sollte. Zwischen dem Luftpresser 3 und dem Lufttrockner 4 ist deshalb ein Druckluft-Wasser-Wärmetauscher 5 angeordnet, der die Aufgabe hat, die Druckluft vor dem Eintritt in den Lufttrockner 4 zu kühlen, damit der vorstehend genannte Grenzwert für die Lufttemperatur nicht überschritten wird.

Der Druckluft-Wasser-Wärmetauscher 5 ist an einen nur schematisch dargestellten Kühlkreislauf 6 angeschlossen, der in dem Nutzfahrzeug 1 ohnehin vorhanden ist und zum Kühlen eines Verbrennungsmotors 7 (z.B. Dieselmotor) dient. Bei dem Kühlkreislauf 6 handelt es sich hierbei um einen Hochtemperatur-Wasserkreislauf, wobei die Temperatur des Kühlwassers in dem Kühlkreislauf 6 von einem Temperaturregler (nicht dargestellt) geregelt wird, so dass die Temperatur des Kühlwassers in dem Kühlkreislauf 6 innerhalb bestimmter Regelgrenzen weitgehend konstant gehalten wird. Das Kühlwasser in dem Kühlkreislauf 6 dient also für den Druckluft-Wasser-Wärmetauscher 5 als Wärmesenke. Dies ist vorteilhaft, weil die Kühlung der Druckluft durch den Druckluft-Wasser-Wärmetauscher 5 dann weitgehend von der Umgebungstemperatur unabhängig ist, da die Temperatur des als Wärmesenke dienenden Kühlwassers in dem Kühlkreislauf 6 von dem Temperaturregler weitgehend konstant gehalten wird.

Weiterhin ist zu erwähnen, dass die erfindungsgemäße Art der Kühlung die Möglichkeit bietet, dass der Luftpresser 3, der Druckluft-Wasser-Wärmetauscher 5, der Lufttrockner 4 und die Druckluftbremsanlage 2 untereinander jeweils durch Kunststoffrohrleitungen 8, 9, 10 verbunden sind, was erst durch die vorherrschenden Temperaturen in der erfindungsgemäßen Anlage ermöglicht wird. Der Druckluft-Wasser-Wärmetauscher 5 ermöglicht die Verwendung von Kunststoffrohren ab dem Druckluft-Wasser-Wärmetauscher 5, was sonst erst viel später möglich wäre, da die Kunststoffrohrleitungen 8-10 mit den hohen Temperaturen Probleme hätten.

Ferner ist noch zu erwähnen, dass der Luftpresser 3 beispielsweise als Einzylinder-Luftpresser ausgebildet sein kann, so dass der Luftpresser 3 die Druckluft mit relativen großen Druckpulsationen erzeugt, was wiederum zu störenden Fördergeräuschen führt. Der Druckluft-Wasser-Wärmetauscher 5 ist deshalb vorzugsweise als Plattenwärmetauscher ausgebildet, was den Vorteil bildet, dass der Plattenwärmetauscher dann die störenden Fördergeräusche des Luftpressers 3 dämpft.

Die Erfindung ist nicht auf das vorstehend beschriebene bevorzugte Ausführungsbeispiel beschränkt. Vielmehr sind vielfältige Abwandlungen und Änderungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den jeweils in Bezug genommenen Ansprüchen.

### Bezugszeichenliste:

- 1: Nutzfahrzeug
- 2: Druckluftbremsanlage
- 3: Luftpresser
- 4: Lufttrockner
- 5: Druckluft-Wasser-Wärmetauscher
- 6: Kühlkreislauf
- 7: Verbrennungsmotor
- 8: Kunststoffrohrleitung
- 9: Kunststoffrohrleitung
- 10: Kunststoffrohrleitung

## Patentansprüche

1. Kraftfahrzeug-Druckluftsystem (3-10), insbesondere zur Druckluftversorgung einer Druckluftbremsanlage (2) in einem Kraftfahrzeug (1), insbesondere in einem Nutzfahrzeug, mit
a) einem Luftpresser (3) zur Erzeugung von Druckluft,
b) einem Lufttrockner (4) zur Trocknung der von dem Luftpresser (3) erzeugten Druckluft und
c) einem Wärmetauscher (5) zur Kühlung der von dem Luftpresser (3) erzeugten Druckluft, die dann in gekühlter Form dem Lufttrockner (4) zugeführt wird,
d) wobei der Wärmetauscher (5) ein Druckluft-Flüssigkeits-Wärmetauscher (5) ist, der Wärme zwischen der Druckluft und einer als Wärmesenke dienenden Flüssigkeit überträgt,
**gekennzeichnet durch**
e) ein Kunststoffrohr (9, 10) zwischen dem Druckluft-Flüssigkeits-Warmetauscher (5) und dem Lufttrockner (4).

2. Kraftfahrzeug-Druckluftsystem (3-10) nach Anspruch 1, **dadurch gekennzeichnet, dass** der Druckluft-Flüssigkeits-Wärmetauscher (5) an einen Flüssigkeitskreislauf (6) angeschlossen ist, in dem die Flüssigkeit strömt.

3. Kraftfahrzeug-Druckluftsystem (3-10) nach Anspruch 2, **dadurch gekennzeichnet, dass** der Flüssigkeitskreislauf (6) ein Kühlkreislauf ist, der einen Fahrzeugmotor (7) kühlt.

4. Kraftfahrzeug-Druckluftsystem (3-10) nach Anspruch 2 oder 3, **dadurch gekennzeichnet, dass** der Flüssigkeitskreislauf (6) ein Wasserkreislauf oder ein Ölkreislauf ist.

5. Kraftfahrzeug-Druckluftsystem (3-10) nach einem der Ansprüche 2 bis 4, **gekennzeichnet durch** einen Temperaturregler, der die Temperatur der Flüssigkeit in dem Flüssigkeitskreislauf (6) regelt.

6. Kraftfahrzeug-Druckluftsystem (3-10) nach einem der vorhergehenden Ansprüche, **gekennzeichnet durch** ein Kunststoffrohr (8) zwischen dem Luftpresser (3) und dem Druckluft-Flüssigkeits-Wärmetauscher (5).

7. Kraftfahrzeug-Druckluftsystem (3-10) nach einem der vorhergehenden Ansprüche, **dadurch gekennzeichnet, dass** der Druckluft-Flüssigkeits-Wärmetauscher (5)
a) ein Plattenwärmetauscher (5) ist oder
b) in Paketbauweise aufgebaut ist.

8. Kraftfahrzeug-Druckluftsystem (3-10) nach einem der vorhergehenden Ansprüche, **dadurch gekennzeichnet,**
a) **dass** der Luftpresser (3) die Druckluft mit Druckpulsationen erzeugt, wobei die Druckpulsationen störende Fördergeräusche erzeugen, und
b) **dass** der Druckluft-Flüssigkeits-Wärmetauscher (5) die störenden Fördergeräusche dämpft.

9. Kraftfahrzeug (1), insbesondere Nutzfahrzeug wie Lastkraftwagen oder Omnibus, mit einem Kraftfahrzeug-Druckluftsystem (3-10) nach einem der vorhergehenden Ansprüche.

10. Kraftfahrzeug (1) nach Anspruch 9, **gekennzeichnet durch** eine Druckluftbremsanlage (2), die von dem Kraftfahrzeug-Druckluftsystem (3-10) mit der Druckluft versorgt wird.

## Claims

1. Motor vehicle compressed air system (3-10), in particular for supplying compressed air to an air brake system (2) in a motor vehicle (1), in particular in a commercial vehicle, having
a) an air compressor (3) for producing compressed air,
b) an air dryer (4) for drying the compressed air produced by the air compressor (3), and
c) a heat exchanger (5) for cooling the compressed air produced by the air compressor (3), which is then fed in the cooled form to the air dryer (4),
d) wherein the heat exchanger (5) is a compressed air/liquid heat exchanger (5), which transfers heat between the compressed air and a liquid acting as a heat sink,
**characterized by**
e) a plastic pipe (9, 10) between the compressed air/liquid heat exchanger (5) and the air dryer (4).

2. Motor vehicle compressed air system (3-10) according to Claim 1, **characterized in that** the compressed air/liquid heat exchanger (5) is connected to a liquid circuit (6) in which the liquid flows.

3. Motor vehicle compressed air system (3-10) according to Claim 2, **characterized in that** the liquid circuit (6) is a cooling circuit which cools a vehicle motor (7).

4. Motor vehicle compressed air system (3-10) according to Claim 2 or 3, **characterized in that** the liquid circuit (6) is a water circuit or an oil circuit.

5. Motor vehicle compressed air system (3-10) according to one of Claims 2 to 4, **characterized by** a temperature regulator which regulates the temperature of the liquid in the liquid circuit (6).

6. Motor vehicle compressed air system (3-10) according to one of the preceding claims, **characterized by** a plastic pipe (8) between the air compressor (3) and the compressed air/liquid heat exchanger (5).

7. Motor vehicle compressed air system (3-10) according to one of the preceding claims, **characterized in that** the compressed air/liquid heat exchanger (5)
a) is a plate heat exchanger (5) or
b) is of pack-type design.

8. Motor vehicle compressed air system (3-10) according to one of the preceding claims, **characterized**
a) **in that** the air compressor (3) produces the compressed air with pressure pulsations, wherein the pressure pulsations produce troublesome delivery noise, and
b) **in that** the compressed air/liquid heat exchanger (5) damps the troublesome delivery noise.

9. Motor vehicle (1), in particular a commercial vehicle, such as a lorry or a bus, having a motor vehicle compressed air system (3-10) according to one of the preceding claims.

10. Motor vehicle (1) according to Claim 9, **characterized by** an air brake system (2) which is supplied with the compressed air by the motor vehicle compressed air system (3-10).

## Revendications

1. Système à air comprimé de véhicule automobile (3-10), servant notamment à l'alimentation en air comprimé d'un système de freinage pneumatique (2) dans un véhicule automobile (1), notamment dans un véhicule utilitaire, comprenant
a) un compresseur d'air (3) destiné à produire de l'air comprimé,
b) un déshydrateur d'air (4) destiné à déshydrater l'air comprimé produit par le compresseur d'air (3) et
c) un échangeur de chaleur (5) destiné à refroidir l'air comprimé produit par le compresseur d'air (3), lequel est ensuite acheminé sous forme refroidie au déshydrateur d'air (4),
d) l'échangeur de chaleur (5) étant un échangeur de chaleur air comprimé - liquide (5) qui transmet la chaleur entre l'air comprimé et un liquide servant de dissipateur de chaleur,
**caractérisé par**
e) un tube en matière plastique (9, 10) entre l'échangeur de chaleur air comprimé - liquide (5) et le déshydrateur d'air (4).

2. Système à air comprimé de véhicule automobile (3-10) selon la revendication 1, **caractérisé en ce que** l'échangeur de chaleur air comprimé - liquide (5) est raccordé à un circuit de liquide (6) dans lequel s'écoule le liquide.

3. Système à air comprimé de véhicule automobile (3-10) selon la revendication 2, **caractérisé en ce que** le circuit de liquide (6) est un circuit de refroidissement qui refroidit un moteur de véhicule (7).

4. Système à air comprimé de véhicule automobile (3-10) selon la revendication 2 ou 3, **caractérisé en ce que** le circuit de liquide (6) est un circuit d'eau ou un circuit d'huile.

5. Système à air comprimé de véhicule automobile (3-10) selon l'une des revendications 2 à 4, **caractérisé par** un régulateur de température qui régule la température du liquide dans le circuit de liquide (6).

6. Système à air comprimé de véhicule automobile (3-10) selon l'une des revendications précédentes, **caractérisé par** un tube en matière plastique (8) entre le compresseur d'air (3) et l'échangeur de chaleur air comprimé - liquide (5).

7. Système à air comprimé de véhicule automobile (3-10) selon l'une des revendications précédentes, **caractérisé en ce que** l'échangeur de chaleur air comprimé - liquide (5)
a) est un échangeur de chaleur à plaques (5) ou
b) est réalisé en une construction en paquet.

8. Système à air comprimé de véhicule automobile (3-10) selon l'une des revendications précédentes, **caractérisé en ce**
a) **que** le compresseur d'air (3) produit l'air comprimé avec des impulsions de pression, les impulsions de pression produisant des bruits de refoulement gênants, et
b) **que** l'échangeur de chaleur air comprimé - liquide (5) atténue les bruits de refoulement gênants.

9. Véhicule automobile (1), notamment véhicule utilitaire tel que camion ou autobus, équipé d'un système à air comprimé de véhicule automobile (3-10) selon l'une des revendications précédentes.

10. Véhicule automobile (1) selon la revendication 9, **caractérisé par** un système de freinage pneumatique (2) qui est alimenté en air comprimé par le système à air comprimé de véhicule automobile (3-10).
